# EUROPÄISCHE PATENTSCHRIFT

(11) **EP 1 523 744 B1**
(45) Veröffentlichungstag und Bekanntmachung des Hinweises auf die Patenterteilung: **16.04.2008**
(21) Anmeldenummer: 03763859.0
(22) Anmeldetag: 15.07.2003
(51) Int. Cl.: G11B 9/02, G11B 9/00

(54) **VERFAHREN ZUM SPEICHERN UND/ODER ZUM AUSLESEN VON INFORMATIONEN IN/AUS EINEM FERROELEKTRISCHEN MATERIAL**
METHOD FOR STORING AND/OR READING INFORMATION IN/OUT OF A FERROELECTRIC MATERIAL
PROCEDE DE STOCKAGE D'INFORMATIONS DANS UN MATERIAU FERROELECTRIQUE ET/OU DE LECTURE D'INFORMATIONS A PARTIR DE CE MATERIAU FERROELECTRIQUE

(30) Priorität: 17.07.2002 DE 10232386
(43) Veröffentlichungstag der Anmeldung: 20.04.2005
(73) Patentinhaber: Qimonda AG, 81739 München (DE)
(72) Erfinder: SCHINDLER, Günther, 80802 München (DE); VOGEL, Markus, 82178 Puchheim (DE); ZYBILL, Christian Erich, 85764 Oberschleissheim (DE)
(74) Vertreter: Ginzel, Christian
(86) Internationale Anmeldenummer: PCT/EP2003/007650
(87) Internationale Veröffentlichungsnummer: WO 2004/008453

(56) Entgegenhaltungen:
- DE-A- 4 018 308
- US-A- 5 946 284
- CH.E.ZYBILL: "The mechanism of polarisation inscription into ferroelectric (111) PZT and (100) SBT films" MATERIAL SCIENCE AND ENGINEERING C, Bd. 18, 2001, Seiten 191-198, XP002260047 in der Anmeldung erwähnt
- C.H.AHN ET.AL.: "Local, Nonvolatile Electronic Writing of Epitaxial Pb(Zr0.52Ti0.48)O3/SrRuO3 Heterostructures" SCIENCE, Bd. 276, 16. Mai 1997 (1997-05-16), XP002260048
- HYUNJUNG SHIN ET.AL.: "Read/Write mechanisms and data storage system using atomic force microscopy and MEMES technology" ULTRAMICROSCOPY, Nr. 91, 2002, Seiten 103-110, XP002260049
- LUKAS M ENG: "Nanoscale domain engineering and charaterization of ferroelectric domains" NANOTECHNOLOGY, Nr. 10, 1999, Seiten 405-411, XP002260050
- C.DURKAN ET.AL.: "Probing domains at the nanometer scale in piezoelectric thin films" PHYSICAL REVIEW B, Bd. 60, Nr. 23, 15. Dezember 1999 (1999-12-15), Seiten 16198-16204, XP002260051
- KHALIL EL-HAMI ET.AL.: "The use of nanotechnology to fabricate ultra-high density molecular memory in P(VDF/TRFE) copolymer: date storage" ANN.CHIM.SCI.MAT, Nr. 26, 2001, Seiten 217-220, XP002260052
- DRAGAN DAMJANOVIC: "Piezoelectric Properties of Perovskite ferroelectrics: unsolved problems and future research" ANN.CNIM.SCI.MAT., Nr. 26, 2001, Seiten 99-106, XP002260053

## Beschreibung

Die Erfindung liegt auf dem Gebiet der Halbleitertechnologie und betrifft ein Verfahren zum Speichern von Information in einem ferroelektrischen Material.

Zum Speichern von Information wird eine Vielzahl von unterschiedlichen Speichermedien verwendet. Eins dieser Speichermedien sind ferroelektrischen Materialien, die durch eine spontane Polarisation gekennzeichnet sind. Die Polarisation kann durch Anlegen eines elektrischen Feldes geändert werden. Dies wird zum Beispiel bei ferroelektrischen Speicherkondensatoren ausgenutzt. In Abhängigkeit davon, ob die Polarisation in eine Richtung oder in die dazu entgegengesetzte Richtung weist, ist in den Speicherkondensator eine logische 1 oder eine logische 0 eingespeichert.

Ferroelektrische Speicherkondensatoren sind Gegenstand intensiver Entwicklung. Voraussetzung für die Verwendung von ferroelektrischen Speicherkondensatoren ist jedoch eine notwendige Strukturierung der ferroelektrischen Schicht einschließlich der an diese Schicht angrenzenden Kondensatorelektroden. Die mit Speicherkondensatoren erreichbare Speicherdichte bestimmt sich im wesentlichen durch die mittels der Lithografie erreichbare kleinste Strukturgröße F. Zur Speicherung von einem Bit wird üblicherweise eine Fläche von mindestens 4 F² benötigt. Großtechnisch liegt F zur Zeit bei etwa 120 nm. Die damit erreichbare Speicherdichte liegt etwa bei 1,7 Gbit/cm². Im Labormaßstab konnte mittels "focused ion beam milling" dagegen bereits eine Strukturgröße von 70 nm erreicht werden (C.S. Ganpule, "Scaling of ferroelectric and piezoelectric properties in Pt/SrBi2Ta2O9/Pt thin films", Appl. Phys. Lett. 75 (1999), 3874-3876). Gewünscht wird jedoch eine deutlich höhere Speicherdichte.

Dazu wurde eine Vielzahl von Untersuchungen angestoßen, um auf anderem Wege Information in ein ferroelektrisches Material einzuspeichern. So wird zum Beispiel in der US 6,064,587 die Verwendung einer leitfähigen, mit einem elektrischen Potential beaufschlagten Spitze vorgeschlagen, die über die Oberfläche eines ferroelektrischen Materials geführt wird und die Polarisation einzelner Domänen des ferroelektrischen Materials modifiziert. Zum Auslesen der eingespeicherten Information werden Verfahren beruhend auf verschiedenen physikalischen Prinzipien vorgeschlagen. Bei einem dieser Verfahren wird die Auslenkung einer in die Nähe der einzelnen Domänen gebrachten nicht-leitfähigen piezoelektrischen Spitze ausgewertet. Als weitere Möglichkeit wird die Ausnutzung des elektro-optischen Effekts vorgeschlagen, bei dem die Änderung der Polarisation von Licht mittels einer Nahfeldoptik registriert wird. Schließlich wird auch die Nutzung nichtlinearer optischer Effekte (beispielsweise Kerr-Effekt, second harmonic generation und Zwei- bzw. Vier Wellenmischung) vorgeschlagen.

Bei der US 5,835,477 wird die Polarisation in das ferroelektrische Materials mittels einer in die Nähe des ferroelektrischen Materials gebrachten und mit einer Spannung beaufschlagten AFM-Spitze geändert und die so eingeschriebene Information durch Messung eines Tunnelstroms zwischen der AFM-Spitze und dem ferroelektrischen Material ausgelesen.

Das elektrische Einschreiben mittels einer AFM-Spitze beschreibt ebenfalls C.H. Ahn et al., "Local, Nonvolatile Electronic Writing of Epitaxial Pb(Zr0.52Ti0.48)O3/SrRUO3 Heterostructures", Science, Vol. 276 (1997), 1100- 1103.

Nachteilig bei dieser Herangehensweise ist, daß beim Auslesen ein elektrisches Feld auf das ferroelektrische Material einwirkt und dabei die Gefahr einer Veränderung der eingespeicherten Information in dieser und angrenzende Domänen gegeben ist. Ein sicheres "non-destructive reading" ist nicht gewährleistet.

Beim Einschreiben der Information in das ferroelektrische Material mittels elektrischen Feldes besteht ebenfalls die Gefahr, daß durch Streuung des elektrischen Feldes benachbarte Domänen ebenfalls in ihrer Polarisation geändert werden. Einzelne Domänen lassen sich daher nicht ausreichend isoliert ansteuern.

Eine weitere grundsätzliche Möglichkeit der Informationsspeicherung mittels ferroelektrischer Schichten kann in der Verwendung von ferroelektrischen Feldeffekttransistoren gesehen werden (S. Mathews et al., "Ferroelectric Field Effect Transistor Based on Epitaxial Perovskite Heterostructures", Science, 276 (1997), 238-240).

Der Artikel "The mechanism of polarisation inscription into ferroelectric (111) PZT and (100) SBT films" von C. E. Zybill, Mat. Sci. Eng., C 18 (2001), Seiten 191 - 198, beschreibt die Domänendynamik von PZT- und SBT-Schichten. Es wird beschrieben, daß eine Polarisationsumkehr von ferroelektrischen Domänen durch die mechanische Aktivierung der Domänen mittels plasmageschärfter Spitzen im "tapping mode" (TMSFM) herbeigeführt werden kann.

Daher liegt der vorliegenden Erfindung die Aufgabe zugrunde, ein Verfahren zum Speichern von Information in ein ferroelektrisches Material anzugeben, bei der eine sichere Adressierung einzelner Domänen gewährleistet ist.

Diese Aufgabe wird erfindungsgemäß durch die Merkmale des Anspruchs 1 gelöst.

Das erfindungsgemäße Verfahren zum Speichern von Information in einem ferroelektrischen Material umfaßt die Schritte:
- ein ferroelektrisches Material mit einer Oberfläche wird bereitgestellt; und
- eine Probensonde wird über die Oberfläche des ferroelektrischen Materials geführt und so nah an die Oberfläche des ferroelektrischen Materials gebracht, daß sie mechanisch auf das ferroelektrische Material einwirkt und dadurch zur Informationsspeicherung eine Polarisationsänderung in einzelnen Bereichen hervorruft.

Einzelne Bereiche des ferroelektrischen Materials werden demnach mechanisch geschaltet, d. h. deren Polarisation durch mechanische Einwirkung verändert, bzw. sogar eine Polarisationsumkehr hervorgerufen. Damit lassen sich piezoelektrische Datenspeicher bilden. Da die Kontaktfläche der Spitze der Probensonde mit dem ferroelektrischen Material, insbesondere bei der Nutzung von typischerweise für AFM-Mikroskope verwendete Spitzen, besonders klein gehalten werden kann (beispielsweise kann der Radius der Kontaktfläche in der Größenordnung einzelner Domänen liegen), können auch unmittelbar benachbarte Domänen weitgehend unabhängig voneinander reversibel geschaltet werden. Die Kontaktfläche der Probenspitze muß daher in der Größenordnung des zu schaltenden Bereichs liegen. Im Falle des Schaltens einzelner Domänen sollte die Kontaktfläche beispielsweise einen Radius von etwa 5 nm aufweisen.

Die vorliegende Erfindung nutzt daher die im Fachartikel von C.E. Zybill, "The mechanism of polarisation inscription into ferroelectric (111) PZT and (100) SBT films", Material Science and Engineering C 18 (2001), 191 - 198 beschriebene Aktivierung von ferroelektrischen Schichten zur Informationsspeicherung aus.

Elektrische Streufelder treten bei dieser Art der Informationsspeicherung nicht auf.

Dabei ist es unerheblich, ob die Spitze der Probensonde im contact mode oder tapping mode auf die Oberfläche des ferroelektrischen Materials einwirkt. Unter contact mode wird der Wechselwirkungsbereich zwischen dem ferroelektrischen Material und der Spitze der Probensonde verstanden, der durch abstoßende Kräfte gekennzeichnet ist, d. h. die Spitze der Probensonde wird so nah an die Oberfläche des ferroelektrischen Materials geführt, daß zwischen ihr und dem ferroelektrischen Material abstoßende Kräfte herrschen. Beim tapping mode oszilliert dagegen die Spitze, wobei sie die Oberfläche des ferroelektrischen Materials nur für einen sehr kurzen Bruchteil der Oszillationsperiode im Sinne des contact mode berührt. Im non-contact mode ist dagegen die Spitze nur im Bereich anziehender intermolekularer Kräfte.

Besonders günstig ist der tapping mode, da durch die Oszillation auf die Spitze einwirkende laterale Kräfte erheblich reduziert sind und somit die Genauigkeit der Adressierung einzelner Bereiche und insbesondere einzelner Domänen deutlich erhöht ist.

Das ferroelektrische Material weist bevorzugt eine Spinell- oder Perowskit-Kristallstruktur oder eine zu diesen verwandte Kristallstruktur auf. Beispiele derartiger Materialien sind PZT (Blei-Zirkon-Titanat) und SBT (Strontium-Bismuth-Tantalat), wobei diese Materialien dotiert und undotiert vorliegen können. Zum Beispiel kann PZT mit Lanthan dotiert werden.

Ein weiterer Vorteil kann darin gesehen werden, daß auf eine Strukturierung des ferroelektrischen Materials bzw. oberer und unterer Kondensatorelektroden zur Bildung von Speicherkondensatoren verzichtet werden kann.

Durch die Adressierung der einzelnen Bereiche, die bevorzugt durch einzelne Kristallite (etwa 200 nm Durchmesser) oder sogar durch einzelne Domänen (etwa 15 nm Breite) gebildet werden, lassen sich Datenspeicher mit Speicherdichten von bis zu 200 Gbit inch⁻² herstellen. Die Informationsspeicherung erfolgt dabei nicht flüchtig.

Zwar ist es bekannt, daß sich einzelne Domänen mit der sogenannten Piezoresponse-Methode sichtbar machen lassen (beispielsweise G.D. Hu et al., "Domain imaging and local piezoelectric properties of the (200)-predominant SrBi2Ta2O9 thin films", Appl. Phys. Lett. 75 (1999), 1610-1612; A. Gruverman et al., "Nanoscopic switching behaviour of epitaxial SrBi2Ta2O9 fims deposited by pulsed laser deposition", Appl. Phys. Lett. 76 (2000), 106-108; A. Gruverman & Y. Ikeda, "Characterization and Control of Domain Structure in SrBi2Ta2O9 Thin Films by Scanning Force Microscopy", Jpn. J. Appl. Phys. 37 (1998), L939-L941), jedoch werden dadurch alle Domänen kollektiv und nicht einzelnen und selektiv aktiviert.

Besonders bevorzugt ist das ferroelektrische Material auf zumindest einer Elektrode angeordnet, die zumindest während der Informationsspeicherung mit einer Vorspannung beaufschlagt wird. Durch die Vorspannung wird ein Potentialtopf gebildet, der die eingespeicherte Polarisation stabilisiert. Dies trägt zu einer sicheren Informationsspeicherung bei. Bevorzugt ist die Vorspannung größer als 0 Volt und liegt beispielsweise zwischen 0 und 10 Volt. Günstigerweise sollte die Vorspannung dauerhaft, d.h. während der gesamten Speicherzeit, angelegt sein.

Weiterhin bevorzugt ist, wenn das ferroelektrische Material mehrere Elektroden bedeckt, wobei jede Elektrode einen Block von einzelnen Bereichen des ferroelektrischen Materials definiert und die Informationsspeicherung blockweise erfolgt. Beispielsweise kann die zu speichernde Information eines ganzen Blocks zunächst in einen Zwischenpuffer geschrieben und nachfolgend in den entsprechenden Block übertragen werden. Bevorzugt wird vor dem Übertragen der Information in das ferroelektrische Material die in dem jeweiligen Block enthaltene Information gelöscht. Dies erfolgt bevorzugt durch Wegnehmen der Vorspannung dieses Blocks, wodurch der Potentialtopf verschwindet und die einzelnen Bereiche der ferroelektrischen Schicht dieses Blocks in ihre ursprüngliche Polarisation relaxieren, d.h. wieder eine ungeordnete Polarisation einnehmen.

Die Verwendung der Vorspannung sichert eine dauerhafte Informationsspeicherung insbesondere dort, wo die einzelnen Bereiche des ferroelektrischen Materials ohne dauerhafte mechanische Einwirkung in ihre ursprüngliche Polarisation relaxieren würden. Außerdem ist das Löschen der eingespeicherten Information besonders einfach. Die Größe der Elektroden definiert die Anzahl der von einem Block umfaßten einzelnen Bereiche und kann praktisch beliebig gewählt werden.

Gegenstand der Erfindung ist weiterhin ein Verfahren zum Auslesen von in einem ferroelektrischen Material gespeicherter Information.

Erfindungsgemäß umfaßt dieses Verfahren die Schritte:
- ein ferroelektrisches Material mit einer Oberfläche wird bereitgestellt, dessen Oberfläche ein Höhenprofil aufweist, welches eine eingespeicherte Information repräsentiert; und
- mittels einer an die Oberfläche des ferroelektrischen Materials geführten Probensonde wird das Höhenprofil der Oberfläche des ferroelektrischen Materials bestimmt, aus dem die im Höhenprofil gespeicherte Information abgeleitet wird.

Die in das ferroelektrische Material eingespeicherte Information, die sich im Höhenprofil des ferroelektrischen Materials wiederfindet, wird erfindungsgemäß durch Abtasten des Höhenprofils ausgelesen. Es wird demnach eine topographische Messung zur Informationsgewinnung verwendet. Die damit erreichbare Ortsauflösung, die bis in den Bereich von wenigen und sogar bis unter 1 nm reicht, liegt um etwa zwei Größenordnungen höher als bei Messungen des Oberflächenpotentials, wie es beispielsweise in der US 5,835,477 und US 6,064,587 erfolgt.

Die Topographie (Höhenprofil) wird dabei durch die Polarisation (Richtung und Betrag) einzelner Bereiche bzw. Domänen bestimmt, d.h. die Information kann in der Polarisation und der damit einhergehenden Änderung der Topographie (Höhenprofil) gesehen werden.

Grundsätzlich ist es unerheblich, wie die Information in das ferroelektrische Material eingeschrieben wurde. Bevorzugt erfolgt es jedoch durch mechanische Einwirkung auf einzelne Domänen. In diesem Fall beruht der Gesamtprozeß von Speicherung und Ermittlung von Information auf mechanischer Wechselwirkung zwischen der Probensonde, bzw. deren Spitze, und dem ferroelektrischen Material.

Alternative Möglichkeiten zum Speichern von Information in einem ferroelektrischen Material umfassen beispielsweise die optische Aktivierung durch kollektives Schalten der Polarisation durch Einstrahlen in die sogenannte Softmode Phononenfrequenz des Phasenübergangs paraelektrisch-ferroelektrisch (etwa 600 cm⁻¹). Die dazu verwendete Strahlung liegt im UV-Bereich (z. B. ein He/Cd Laser oder Excimer Laser) deren Wellenlänge so gewählt ist, daß E > E_{bandgap} des ferroelektrischen Materials gilt. Insbesondere nach Dotierung des ferroelektrischen Materials mit Seltenerdeverbindungen ist optisch eine Aktivierung einzelner Domänen möglich. Zur Verbesserung der Ortsauflösung empfiehlt sich die Verwendung einer Nahfeldoptik. Ein geeignetes Material ist dabei Lanthan-dotiertes PZT.

Eine weitere alternative Möglichkeit besteht in der magnetische Aktivierung durch Variation der Zusammensetzung des ferroelektrischen Materials (Einbau magnetischer Atome) oder durch den Aufbau von "Superlattices" mit funktionalen, z. B. magnetischen oder supraleitenden Schichten. In derartige Schichten läßt sich z. B. eine mit einer Magnetfeldänderung gekoppelte induzierte Polarisationsumkehrung des ferroelektrischen Materials erreichen. Dies kann ebenfalls domänenweise durchgeführt werden. Dieser Informationsspeicherung beruht z.B. auf dem Kerr-Effekt.

Möglich ist ebenfalls die elektrische Aktivierung einzelner Bereiche (Kristallite oder Domänen) durch metallisierte und mit einer elektrischen Spannung beaufschlagte Metallspitzen.

Die Erfindung betrifft weiterhin eine Vorrichtung zum Speichern und Auslesen von Information in einem ferroelektrischen Material. Solche Vorrichtungen sind beispielsweise aus der bereits genannten US 5,835,477 und US 6,06 4,587 bekannt.

Die Vorrichtung zum Speichern und Auslesen von Information in einem ferroelektrischen Material weist erfindungsgemäß die folgenden Merkmale auf:
- ein ferroelektrisches Material mit einer Oberfläche,
- mindestens eine Probensonde zum Einschreiben von Information in das ferroelektrische Material, die über die Oberfläche des ferroelektrischen Materials führbar ist,
- mindestens eine Probensonde zum Auslesen von Information aus dem ferroelektrischen Material, die über die Oberfläche des ferroelektrischen Materials führbar ist, wobei zum Auslesen der Information ein Höhenprofil der Oberfläche des ferroelektrischen Materials erstellbar ist, und
- eine Auswerteeinheit, die aus dem Höhenprofil der Oberfläche des ferroelektrischen Materials die eingespeicherte Information ableitet.

Die Probensonden zum Auslesen und zum Einspeichern der Information können durch eine gemeinsame oder durch getrennte Probensonden gebildet werden. Im einfachsten Fall umfaßt die erfindungsgemäße Vorrichtung demnach zumindest eine Probensonde sowohl zum Schreiben als auch zum Auslesen der Information. Durch die Verwendung getrennter Probensonden zum Schreiben und Auslesen der Information ist im Vergleich zur Verwendung einer einzigen Probensonde ein paralleles Einspeichern und Auslesen möglich.

Zum Einspeichern von Information wirkt die Probensonde mechanisch auf die Oberfläche des ferroelektrischen Materials ein und führt dadurch zu einer Polarisationsänderung bzw. Polarisationsumkehr einzelner Bereiche bzw. einzelner Domänen, die sich in einer Modifizierung des Höhenprofils des ferroelektrischen Materials niederschlägt. Das so modifizierte Höhenprofil wird durch die Probensonde zum Auslesen der Information abgetastet und aus dem abgetasteten Höhenprofil die eingespeicherte Information gewonnen. Dazu dient die Auswerteeinheit.

Bei der mit der Oberfläche des ferroelektrischen Materials wechselwirkenden Spitze der Probensonde handelt es sich bevorzugt um Plasma-geschärfte Siliziumspitzen (SSS), um im Elektrodenstrahl abgeschiedenen Kohlenstoffspitzen (EBD) oder um sogenannte "Kohlenstoffnanoröhrchen" ("Carbon Nano Tubes (CNT)"). Carbon Nano Tubes lassen sich bevorzugt mit einem CVD-Verfahren abgescheiden und weisen bevorzugt einen Durchmesser von wenigen Nanometern auf.

Besonders bevorzugt bedeckt das ferroelektrische Material zumindest einer Elektrode, die mit einer Vorspannung beaufschlagbar ist, um die mechanisch induzierte Polarisationsumkehr/-änderung zu stabilisieren. Außerdem läßt sich durch Wegnehmen der Vorspannung die eingespeicherte Information leicht löschen.

Weiterhin ist bevorzugt, wenn das ferroelektrische Material mehrere Elektroden bedeckt, wobei jede Elektrode einen Block von einzelnen Bereichen des ferroelektrischen Materials definiert und die einzelnen Elektroden jeweils unabhängig voneinander mit einer Vorspannung beaufschlagbar sind. Die einzelnen Blöcke lassen sich daher unabhängig voneinander sowohl beschreiben als auch löschen.

Die Erfindung kann demnach auch wie folgt zusammengefaßt werden:
Zum Speichern von Information in einem ferroelektrischen Material wird mittels einer Probensonde mechanisch auf einzelne Bereiche/Domänen eingewirkt und dadurch eine Polarisationsänderung/-umkehr der einzelnen Bereiche/Domänen hervorgerufen, wobei zur Stabilisierung der Polarisationsänderung/-umkehr unterhalb des ferroelektrsichen Materials befindliche Elektroden mit einer Vorspannung beaufschlagt werden können. Mit der Polarisationsänderung/-umkehr tritt eine Veränderung der Oberflächentopographie (Höhenprofil) des ferroelektrischen Materials auf, die zum Auslesen der Information herangezogen werden kann. Die eingespeicherte Information wird daher durch Ermittlung der Oberflächentopographie des ferroelektrischen Materials gewonnen. Das Einschreiben und Auslesen der Information erfolgt mittels einer AFM-Spitze, wobei zum Einschreiben die Spitze im contact oder tapping mode, zum Auslesen zusätzlich auch im non-contact betrieben werden kann.

Im folgenden wird die Erfindung anhand eines Ausführungsbeispiels beschrieben und in Figuren dargestellt. Es zeigen:
- Figur 1: eine Prinzipskizze der mechanische Aktivierung;
- Figur 2: eine erfindungsgemäße Vorrichtung zum Einspeichern und Auslesen;
- Figur 3a: die zweidimensionale Darstellung des mittels einer AFM-Spitze abgetasteten Höhenprofils eines ferroelektrischen Materials;
- Figur 3b: ein Linienscan entlang der in Figur 3a gezeigten Linie;
- Figur 4: die Messung der Auslenkung der Probensonde; und
- Figur 5: die Messung von vier Zyklen der Auslenkung der Probensonde.

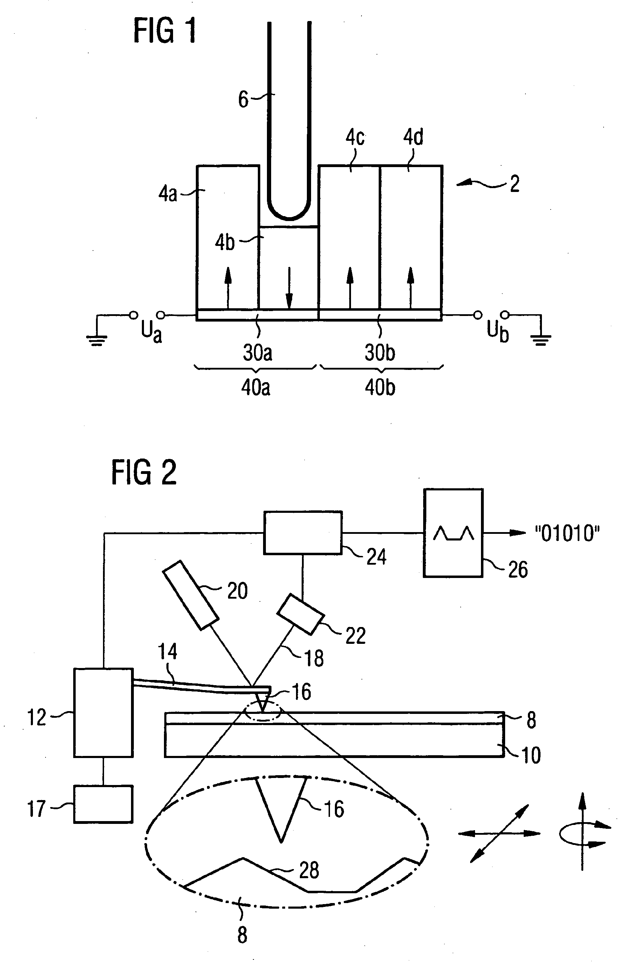

Figur 1 zeigt ein ferroelektrisches Material 2, welches mehrere Domänen 4a - 4d aufweist. Durch Pfeile ist die Richtung der Polarisation der einzelnen Domänen angedeutet. Mittels einer Probensonde 6 wird eine Kraft auf die Domäne 4b ausgeübt und dadurch eine Polarisationsumkehr dieser Domäne hervorgerufen.

Das Gerüst der Gleichgewichts-Domänenstruktur wird im wesentlichen während der Herstellung des ferroelektrischen Materials und insbesondere während der Kristallisation bestimmt.

Bei polykristallinem ferroelektrischen Material, wie es in der Regel zur Anwendung kommt, besteht das ferroelektrische Material aus vielen kleinen Kristalliten (häufig auch als Körner bezeichnet) mit unterschiedlicher Ausrichtung der Kristallstruktur. Bei der Bildung der einzelnen Kristallite tritt eine spontane Polarisation auf. Bezirke innerhalb einzelner Kristallite mit gleicher Polarisation werden dabei als Domänen bezeichnet. Es ist möglich, daß sich in einem Kristallit eine einzige Domäne ausbildet. Andererseits wird auch die Ausbildung von mehreren Domänen innerhalb eines Kristallits beobachtet. Je größer die Kristallite, desto höher ist die Wahrscheinlichkeit der Mehrfachdomänen. Weiterführende Angaben hierzu finden sich unter anderem in
Q.D. Jiang et al., "Nucleation and surface morphology evolution of ferroelectric SrBi2Ta2O9 films studied by atomic force microscopy", Surface Science 405 (1998), L554-560;
C.E. Zybill et al., "Substrate Influence on the Domain Structure of (111) PZT PbTi0.75Zr0.25O3 Films", phys. stat. sol (a) 1777 (2000), 303-309; und
A.E. Romanov et al., "Domain Patterns in (111) Oriented Tetragonal Ferroelectric Films", phys. stat. sol (a) 172 (1999), 225-253.

Domänen, die eine positive Polarisationskomponente senkrecht zur Oberfläche des ferroelektrischen Materials aufweisen, lassen sich sowohl im tapping mode als auch im contact mode durch Impulsübertragung in ihrer Polarisation um 180° umkehren. Durch geeignete Maßnahmen bei der Herstellung des ferroelektrischen Materials können die Polarisationsachsen der einzelnen Domänen im wesentlichen senkrecht zur Oberfläche ausgerichtet werden. Dies kann beispielsweise während der Kristallisation unter Einwirkung eines elektrischen Feldes erreicht werden.

Die Polarisationsumkehr ist aufgrund des piezoelektrischen Effekts des ferroelektrischen Materials mit einer deutlichen Änderung der Oberflächentopographie verbunden. Daher ist durch nachträgliche Ermittlung der Oberflächentopographie ein Auslesen der eingespeicherten Information möglich.

Im contact mode werden Hysteresekurven für die Schalteffekte von ca. 1 nm Hub und ca. 5 nN Kraft zur Schaltung einer Domäne von ca. 17 nm Breite beobachtet. Die Messungen wurden an einem Film von etwa 700 nm Dicke an (111) orientiertem PZT der Zusammensetzung PbTi_{0.75}Zr_{0.25} durchgeführt. Das PZT wurde auf kommerzielle Platinelektroden auf oxidierten (100) Siliziumwafern gesputtert. Dies kann beispielsweise gemäß dem im Fachartikel von R. Bruchhaus et al., Integrated Ferroelectrics 14 (1997), 141, veröffentlichten Verfahren erfolgen.

Das ferroelektrische Material 2 bedeckt mehrere Elektroden 30a und 30b. Die Ausdehnung der einzelnen Elektroden 30a und 30b ist größer als die Ausdehnung einzelner zu schaltender Bereiche 4a, 4b, 4c und 4d, so daß durch jede Elektrode 30a und 30b mehrere einzelne Bereiche 4a, 4b, 4c und 4d zu einzelnen Blöcken 40a und 40b zusammengefaßt werden. Jeder Block 40a und 40b ist unabhängig von den anderen Blöcken mit einer Vorspannung Uₐ und U_{b} beaufschlagbar. Durch Anlegen der Vorspannungen, die zwischen 0 und 10 Volt liegen kann, wird die mechanisch eingeschriebene Polarisation stabilisiert. Die Vorspannung muß demnach so hoch gewählt werden, daß ein ausreichend tiefer, die eingeschriebene Polarisation stabilisierender Potentialtopf ausgebildet wird. Andererseits läßt sich durch Wegnehmen der Vorspannung die eingeschriebene Polarisation und damit die eingeschriebene Information leicht löschen.

Figur 2 stellt eine erfindungsgemäße Vorrichtung zum Einspeichern und Auslesen von Information dar. Die Information wird in eine ferroelektrischen Schicht 8 eingeschrieben, die auf einem Substrat 10 angeordnet ist. Ein von einer Scan-Einheit 12 getragener AFM-Cantilever 14 wird mit seiner Spitze 16 über die Oberfläche der ferroelektrischen Schicht 8 geführt. Dabei wird die Lage der Scan-Einheit 12, insbesondere in z-Richtung senkrecht zur Oberfläche der ferroelektrischen Schicht 8, üblicherweise durch eine Spannung U_{scanner} bestimmt, die an piezoelektrische Stellglieder angelegt wird. Mit der Lageänderung der Scan-Einheit wird gleichzeitig der Cantilever bewegt. Die Auslenkung des Cantilevers 14, die von der Wechselwirkung mit der Oberfläche der ferroelektrischen Schicht abhängt, wird mittels eines an der Rückseite des Cantilevers 14 reflektierten Laserstrahls 18 ermittelt. Dazu ist ein von einem Laser 20 emittierter Laserstrahl auf den Cantilever 14 gerichtet. Das von ihm reflektierte Licht wird von einem 2- oder 4-Feldsensor 22 registriert. In Abhängigkeit von der Ausleuchtung der Felder des Sensors 22 kann auf die Auslenkung des Cantilevers 14 geschlossen werden. Über einen Feedback-Regelkreis 24 wird die Lage des Cantilevers so verändert, daß er auslenkungsfrei ist.

Zum Einspeichern von Information wird der Cantilever 14 mit seiner Spitze 16 so gegen die Oberfläche der ferroelektrischen Schicht 8 gedrückt, daß eine Polarisationsumkehr einzelner Domänen auftritt. Die erforderliche Kraft kann bei Kenntnis der Federkonstante des Cantilevers und der Kontaktfläche zwischen Spitze und ferroelektrischer Schicht über die Auslenkung ermittelt werden. Die Kontaktfläche zwischen Spitze 16 und ferroelektrischer Schicht 8 sollte ausreichend klein sein, um einzelne Domänen schalten zu können. Beispielsweise eine Kontaktfläche mit einem Radius von 5 nm ist geeignet. Bei den Spitze 16 kann es sich sowohl um Plasma-geschärfte Siliziumspitzen als auch um im Elektrodenstrahl abgeschiedene Kohlenstoffspitzen handeln. Die Spitze 16 kann dabei sowohl im contact mode als auch im tapping mode über die Oberfläche der ferroelektrischen Schicht 8 geführt werden.

Die zu speichernde Information wird aus einem Zwischenpuffer 17 ausgelesen und blockweise in die ferroelektrische Schicht 8 eingeschrieben. Dazu wird zunächst die Vorspannung der Elektrode des entsprechenden Blocks weggenommen, so daß die einzelnen Bereiche der ferroelektrischen Schicht relaxieren können. Danach erfolgt unter Anlegen der Vorspannung das Einschreiben der Information.

Je nach Bedarf kann zum Abtasten der Oberfläche der ferroelektrischen Schicht 8 eine Scanbewegung von Spitze relativ zur ferroelektrischen Schicht in x- und y-Richtung oder durch Rotation der ferroelektrischen Schicht und Abtasten unterschiedlicher Radien erfolgen. Letztere Möglichkeit ist beispielsweise von den Festplatten eines Computers her bekannt. Beim Auslesen ist neben dem contact mode und tapping mode auch der non-contact mode möglich.

Zum Auslesen der eingespeicherten Information wird mit der Spitze 16 die Oberfläche der ferroelektrischen Schicht 8 abgetastet und die Oberflächentopographie bzw. das Höhenprofil 28 der Oberfläche ermittelt. Die dabei gewonnenen Daten werden einer Auswerteeinheit 26 zugeführte, die der Extraktion der eingespeicherten Information aus dem Höhenprofil 28 dient.

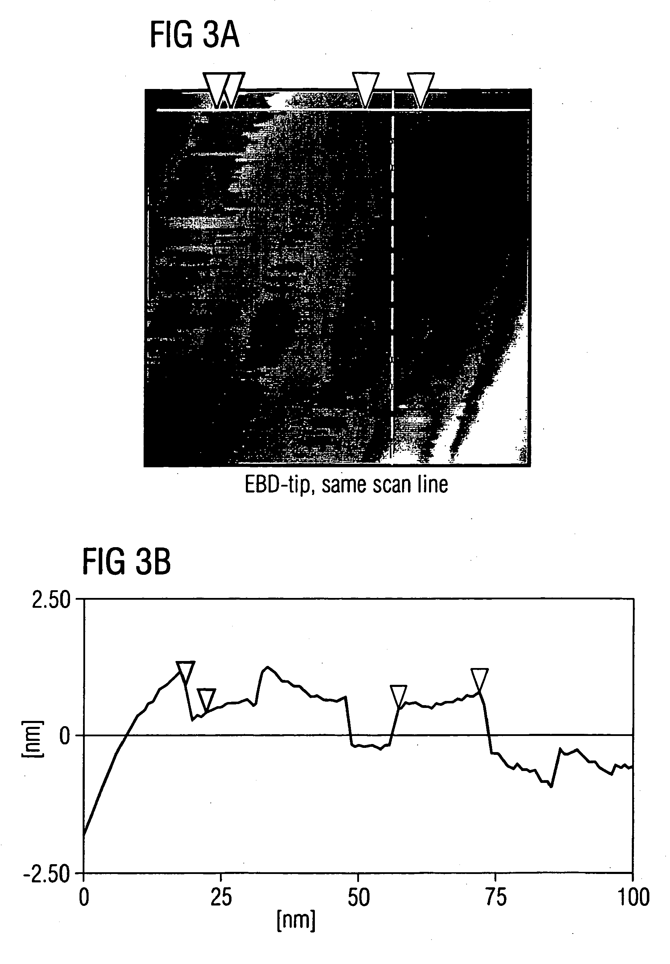

Ein derartiges zweidimensionales Höhenprofil ist beispielsweise in Figur 3a gezeigt. Dagegen zeigt Figur 3b das Höhenprofil entlang der in Figur 3a angedeuteten Linie.

Das Höhenprofil wurde mit einer EBD-Spitze mit einem Radius der Kontaktfläche von 5 nm an einer Oberfläche einer (111) PZT-Schicht ermittelt. Deutlich erkennbar ist im Höhenprofil in Figur 3a die Aktivierung, d. h. die Polarisationsumkehr um 180°, jeder zweiten Domäne.

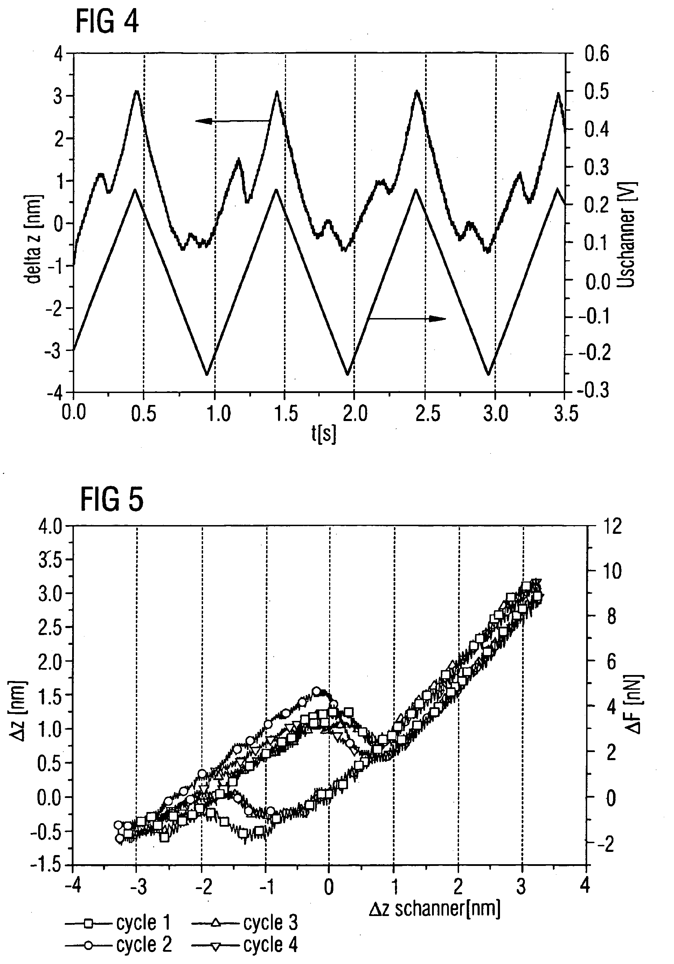

In Figur 4 zeigt die untere Kurve die Scanner-Amplitude, d.h. die Lage der Scan-Einheit 12, und die obere Kurve die Antwort der PZT-Domäne, d.h. der Auslenkung der AFM-Spitze. Die Antwort folgt im wesentlichen der Anregung, d.h. der mechanischen Aktivierung, springt jedoch im ansteigenden Ast bei ca. U_{scanner}=0.04V in die andere Polarisationsrichtung, im absteigenden Ast bei ca. U_{scanner}=-0.1V wieder in die Ausgangslage zurück. Es wurde eine EBD-Spitze im contact mode auf einer Domäne einer (111) PZT-Schicht betrieben.

In Figur 5 ist dagegen die Auslenkung des Cantilevers (umgerechnet in ΔF) in Abhängigkeit von der Scanner-Amplitude (umgerechnet in Δz_{scanner}) für die vier Zyklen aus Figur 4 dargestellt. Der Hub einer Domäne beträgt etwa 1 nm wobei für die Polarisationsumkehr einer Domäne etwa 5 nN erforderlich sind. Die ausgebildete Hysteresekurve ist deutlich erkennbar.

### Bezugszeichenliste

- 2,8: ferroelektrisches Material/ferroelektrische Schicht
- 4a,4b,4c,4d: Domäne
- 6: Probensonde
- 10: Substrat
- 12: Scan-Einheit
- 14: Cantilever
- 16: Spitze
- 17: Zwischenpuffer
- 18: Laserstrahl
- 20: Laser
- 22: Sensor
- 24: Feedback-Einheit
- 26: Auswerteeinheit
- 28: Höhenprofil / Oberflächentopographie
- 30a, 30b: Elektroden
- 40a, 40b: Blöcke
- Uₐ, U_{b}: Vorspannungen

## Patentansprüche

1. Verfahren zum Speichern von Information in einem ferroelektrischen Material mit den Schritten:
- ein ferroelektrisches Material (2, 8) mit einer Oberfläche wird bereitgestellt, wobei das ferroelektrische Material (2, 8) auf zumindest einer Elektrode (30a, 30b) angeordnet ist und die Elektrode (30a, 30b) dauerhaft während der gesamten Speicherzeit mit einer Vorspannung (Uₐ, U_{b}) beaufschlagt wird; und
- eine Probensonde (6, 14, 16) wird über die Oberfläche des ferroelektrischen Materials (2, 8) geführt und so nah an die Oberfläche des ferroelektrischen Materials (2, 8) gebracht, daß sie mechanisch auf das ferroelektrische Material (2, 8) einwirkt und dadurch zur Informationsspeicherung eine Polarisationsänderung in einzelnen Bereichen (4a, 4b, 4c, 4d) des ferroelektrischen Materials hervorruft.

2. Verfahren nach Anspruch 1,
**dadurch gekennzeichnet, daß**
das ferroelektrische Material (2, 8) einzelne Domänen (4a, 4b, 4c, 4d) aufweist, welche die einzelnen Bereiche (4a, 4b, 4c, 4d) darstellen, wobei die Polarisationsänderung dieser einzelnen Domänen (4a, 4b, 4c, 4d) mittels der Probensonde (6, 14, 16) erfolgt.

3. Verfahren nach Anspruch 1 oder 2,
**dadurch gekennzeichnet,daß**
die mechanische Einwirkung mittels einer Spitze (16) der Probensonde (14) erfolgt.

4. Verfahren nach Anspruch 3,
**dadurch gekennzeichnet,daß**
die Spitze (16) im contact mode oder tapping mode auf die Oberfläche des ferroelektrischen Materials (2, 8) einwirkt.

5. Verfahren nach einem der vorherigen Ansprüche,
**dadurch gekennzeichnet, daß**
das ferroelektrische Material (2, 8) eine Perowskit-, Spinell- oder verwandte Kristallstruktur aufweist.

6. Verfahren nach Anspruch 5,
**dadurch gekennzeichnet, daß**
es sich bei dem ferroelektrischen Material (2, 8) um dotierte oder undotierte SBT- oder PZT-Schichten handelt.

7. Verfahren nach einem der Ansprüche 1 bis 6,
**dadurch gekennzeichnet, daß**
das ferroelektrische Material (2, 8) mehrere Elektroden (30a, 30b) bedeckt, wobei jede Elektrode (30a, 30b) einen Block (40a, 40b) von einzelnen Bereichen (4a, 4b, 4c, 4d) des ferroelektrischen Materials (2, 8) definiert und die Informationsspeicherung blockweise erfolgt.

8. Verfahren nach einem der Ansprüche 1 bis 7,
**dadurch gekennzeichnet, daß**
zum Löschen der eingespeicherten Information die Vorspannung (Uₐ, U_{b}) der mindestens einen Elektrode (30a, 30b) weggenommen wird.

9. Verfahren nach Anspruch 8,
**dadurch gekennzeichnet, daß**
vor der Informationsspeicherung die eingespeicherte Information gelöscht wird.

10. Verfahren nach Anspruch 9,
**dadurch gekennzeichnet, daß**
die eingespeicherte Information blockweise gelöscht wird.

11. Verfahren zum Auslesen von in einem System nach einem der Ansprüche 17 bis 20 gespeicherter Information mit den Schritten:
- das ferroelektrische Material (2, 8) mit einer Oberfläche wird bereitgestellt, dessen Oberfläche ein Höhenprofil (28) aufweist, welches die eingespeicherte Information repräsentiert, wobei das ferroelektrische Material (2, 8) mehrere Elektroden (30a, 30b) bedeckt, wobei jede Elektrode (30a, 30b) einen Block (40a, 40b) von einzelnen Bereichen (4a, 4b, 4c, 4d) des ferroelektrischen Materials (2, 8) definiert und die einzelnen Elektroden (30a, 30b) jeweils unabhängig voneinander dauerhaft während der gesamten Speicherzeit mit einer Vorspannung (Uₐ, U_{b}) beaufschlagt sind; und
- mittels einer an die Oberfläche des ferroelektrischen Materials (2, 8) geführten Probensonde (6, 14, 16) wird das Höhenprofil der Oberfläche des ferroelektrischen Materials (2, 8) bestimmt, aus dem die im Höhenprofil (28) gespeicherte Information abgeleitet wird.

12. Verfahren nach Anspruch 11,
**dadurch gekennzeichnet, daß**
das Höhenprofil (28) der Oberfläche des ferroelektrischen Materials (2, 8) durch die Polarisation einzelner Bereiche (4a, 4b, 4c, 4d) des ferroelektrischen Materials (2, 8) bestimmt ist.

13. Verfahren nach Anspruch 11 oder 12,
**dadurch gekennzeichnet,daß**
das Höhenprofil (28) der Oberfläche des ferroelektrischen Materials (2, 8) mittels einer Spitze (16) der Probensonden (14) bestimmt wird.

14. Verfahren nach Anspruch 13,
**dadurch gekennzeichnet,daß**
die Spitze (16) im tapping mode, contact mode oder non-contact mode über die Oberfläche des ferroelektrischen Materials (2, 8) zur Bestimmung des Höhenprofils (28) des ferroelektrischen Materials (2, 8) geführt wird.

15. Verfahren nach einem der vorherigen Ansprüche,
**dadurch gekennzeichnet, daß**
es sich bei der Spitze (16) der Probensonde (14) um eine AFM-Spitze handelt.

16. Verfahren nach Anspruch 15,
**dadurch gekennzeichnet, daß**
es sich bei der AFM-Spitze um eine plasma-geschärfte Siliziumspitze, eine im Elektrodenstrahl abgeschiedene Kohlenstoffspitze oder um eine Kohlenstoffnanoröhrchenspitze handelt.

17. System zum Speichern und Auslesen von Information in einem ferroelektrischen Material umfassend
- ein ferroelektrisches Material (2, 8) mit einer Oberfläche, wobei das ferroelektrische Material (2, 8) mehrere Elektroden (30a, 30b) bedeckt, wobei jede Elektrode (30a, 30b) einen Block (40a, 40b) von einzelnen Bereichen (4a, 4b, 4c, 4d) des ferroelektrischen Materials (2, 8) definiert und die einzelnen Elektroden (30a, 30b) jeweils unabhängig voneinander dauerhaft während der gesamten Speicherzeit mit einer Vorspannung (Uₐ, U_{b}) beaufschlagbar sind,
- mindestens eine Probensonde (6, 14, 16) zum Einschreiben von Information in das ferroelektrische Material (2, 8), die über die Oberfläche des ferroelektrischen Materials (2, 8) führbar ist, wobei mittels der Probensonde (6, 14, 16) zum Einschreiben der Information mechanisch eine Polarisationsänderung einzelner Bereiche (4a, 4b, 4c, 4d) des ferroelektrischen Materials (2, 8) hervorrufbar ist,
- mindestens eine Probensonde (6, 14, 16) zum Auslesen von Information aus dem ferroelektrischen Material (2, 8), die über die Oberfläche des ferroelektrischen Materials (2, 8) führbar ist, wobei zum Auslesen der Information ein Höhenprofil (28) der Oberfläche des ferroelektrischen Materials (2, 8) erstellbar ist, und
- eine Auswerteeinheit (26), die aus dem Höhenprofil (28) der Oberfläche des ferroelektrischen Materials (2, 8) die eingespeicherte Information ableitet.

18. System nach Anspruch 17,
**dadurch gekennzeichnet, daß**
die Probensonde (6, 14, 16) eine Plasma-geschärfte Siliziumspitze, eine im Elektrodenstrahl abgeschiedene Kohlenstoffspitze oder eine Kohlenstoffnanoröhrchenspitze aufweist, welche zum Einschreiben und/oder Auslesen der Information dient.

19. System nach Anspruch 17 oder 18,
**dadurch gekennzeichnet, daß**
das ferroelektrische Material (2, 8) eine Perowskit-, Spinell- oder verwandte Kristallstruktur aufweist.

20. System nach Anspruch 19,
**dadurch gekennzeichnet, daß**
es sich bei dem ferroelektrischen Material (2, 8) um dotierte oder undotierte SBT- oder PZT-Schichten handelt.

## Claims

1. Method for storing information in a ferroelectric material, having the following steps:
- a ferroelectric material (2, 8) having a surface is provided, the ferroelectric material (2, 8) being arranged on at least one electrode (30a, 30b), and the electrode (30a, 30b) having a bias (Uₐ, U_{b}) applied to it continuously during the entire storage time; and
- a sample probe (6, 14, 16) is passed over the surface of the ferroelectric material (2, 8) and is brought close enough to the surface of the ferroelectric material (2, 8) for it to have a mechanical action on the ferroelectric material (2, 8) and therefore to bring about a change of polarization in individual regions (4a, 4b, 4c, 4d) of the ferroelectric material in order to store information.

2. Method according to Claim 1,
**characterized in that**
the ferroelectric material (2, 8) has individual domains (4a, 4b, 4c, 4d) which represent the individual regions (4a, 4b, 4c, 4d), the change of polarization in these individual domains (4a, 4b, 4c, 4d) being effected by means of the sample probe (6, 14, 16).

3. Method according to Claim 1 or 2,
**characterized in that**
the mechanical action is brought about by means of a tip (16) of the sample probe (14).

4. Method according to Claim 3,
**characterized in that**
the tip (16) acts on the surface of the ferroelectric material (2, 8) in contact mode or tapping mode.

5. Method according to one of the preceding claims,
**characterized in that**
the ferroelectric material (2, 8) has a perovskite, spinel or related crystal structure.

6. Method according to Claim 5,
**characterized in that**
the ferroelectric material (2, 8) is doped or undoped SBT or PZT layers.

7. Method according to one of Claims 1 to 6,
**characterized in that**
the ferroelectric material (2, 8) covers a plurality of electrodes (30a, 30b), with each electrode (30a, 30b) defining a block (40a, 40b) of individual regions (4a, 4b, 4c, 4d) of the ferroelectric material (2, 8), and the information being stored in blocks.

8. Method according to one of Claims 1 to 7,
**characterized in that**
the stored information is erased by removing the bias (Uₐ, U_{b}) from the at least one electrode (30a, 30b).

9. Method according to Claim 8,
**characterized in that**
prior to the storage of information the stored information is erased.

10. Method according to Claim 9,
**characterized in that**
the stored information is erased in blocks.

11. Method for reading information which has been stored in a system using a method according to one of Claims 17 to 20, having the following steps:
- the ferroelectric material (2, 8) having a surface is provided, whose surface has a relief (28) which represents the stored information, the ferroelectric material (2, 8) covering a plurality of electrodes (30a, 30b), with each electrode (30a, 30b) defining a block (40a, 40b) of individual regions (4a, 4b, 4c, 4d) of the ferroelectric material (2, 8), and the individual electrodes (30a, 30b) each being able to have a bias (Uₐ, U_{b}) applied to them independently of one another continuously during the entire storage time; and
- a sample probe (6, 14, 16) passed over the surface of the ferroelectric material (2, 8) is used to determine the relief of the surface of the ferroelectric material (2, 8), from which the information stored in the relief (28) is derived.

12. Method according to Claim 11,
**characterized in that**
the relief (28) of the surface of the ferroelectric material (2, 8) is determined by the polarization of individual regions (4a, 4b, 4c, 4d) of the ferroelectric material (2, 8).

13. Method according to Claim 11 or 12,
**characterized in that**
the relief (28) of the surface of the ferroelectric material (2, 8) is determined by means of a tip (16) of the sample probes (14).

14. Method according to Claim 13,
**characterized in that**
the tip (16) is passed over the surface of the ferroelectric material (2, 8) in tapping mode, contact mode or noncontact mode in order to determine the relief (28) of the ferroelectric material (2, 8).

15. Method according to one of the preceding claims,
**characterized in that**
the tip (16) of the sample probe (14) is an AFM tip.

16. Method according to Claim 15,
**characterized in that**
the AFM tip is a plasma-sharpened silicon tip, a carbon tip deposited in the electrode beam or a carbon nanotube tip.

17. System for storing and reading information in a ferroelectric material, comprising
- a ferroelectric material (2, 8) having a surface, the ferroelectric material (2, 8) covering a plurality of electrodes (30a, 30b), with each electrode (30a, 30b) defining a block (40a, 40b) of individual regions (4a, 4b, 4c, 4d) of the ferroelectric material (2, 8), and the individual electrodes (30a, 30b) each being able to have a bias (Uₐ, U_{b}) applied to them independently of one another continuously during the entire storage time,
- at least one sample probe (6, 14, 16) for writing information into the ferroelectric material (2, 8), which can be passed over the surface of the ferroelectric material (2, 8), the sample probe (6, 14, 16) being able to be used to bring about a change of polarization in individual regions (4a, 4b, 4c, 4d) of the ferroelectric material (2, 8) mechanically in order to write the information,
- at least one sample probe (6, 14, 16) for reading information from the ferroelectric material (2, 8), which can be passed over the surface of the ferroelectric material (2, 8), a relief (28) of the surface of the ferroelectric material (2, 8) being able to be created in order to read the information, and
- an evaluation unit (26) which derives the stored information from the relief (28) of the surface of the ferroelectric material (2, 8).

18. System according to Claim 17,
**characterized in that**
the sample probe (6, 14, 16) has a plasma-sharpened silicon tip, a carbon tip deposited in the electrode beam or a carbon nanotube tip which is used to write and/or read the information.

19. System according to Claim 17 or 18,
**characterized in that**
the ferroelectric material (2, 8) has a perovskite, spinel or related crystal structure.

20. System according to Claim 19,
**characterized in that**
the ferroelectric material (2, 8) is doped or undoped SBT or PZT layers.

## Revendications

1. Procédé de mémorisation d'information dans un matériau ferroélectrique comprenant les stades dans lesquels :
- on prépare un matériau (2, 8) ferroélectrique ayant une surface, le matériau (2, 8) ferroélectrique étant disposé sur au moins une électrode (30a, 30b) et l'électrode (30a, 30b) étant soumise d'une manière durable pendant toute la durée de mémorisation à une tension (Uₐ, U_{b}) de polarisation, et
- on fait passer une sonde (6, 14, 16) d'échantillonnage sur la surface du matériau (2, 8) ferroélectrique et on la met si près de la surface du matériau (2, 8) ferroélectrique qu'elle agit mécaniquement sur le matériau (2, 8) ferroélectrique et provoque ainsi pour la mémorisation de l'information une variation de la polarisation dans diverses parties (4a, 4b, 4c, 4d) du matériau ferroélectrique.

2. Procédé suivant la revendication 1,
**caractérisé en ce que**
le matériau (2, 8) ferroélectrique a divers domaines (4a, 4b, 4c, 4d) qui constituent les diverses parties (4a, 4b, 4c, 4d), la variation de polarisation de ces divers domaines (4a, 4b, 4c, 4d) s'effectuant au moyen de la sonde (6, 14, 16) d'échantillonnage.

3. Procédé suivant la revendication 1 ou 2,
**caractérisé en ce que**
l'effet mécanique s'effectue au moyen d'une pointe (16) de la sonde (14) d'échantillonnage.

4. Procédé suivant la revendication 3,
**caractérisé en ce que**
la pointe (16) agit en mode contact ou en mode tapping sur la surface du matériau (2, 8) ferroélectrique.

5. Procédé suivant l'une des revendications précédentes,
**caractérisé en ce que**
le matériau (2, 8) ferroélectrique a une structure cristalline de perowskite, de spinelle ou apparentée.

6. Procédé suivant la revendication 5,
**caractérisé en ce que**
le matériau (2, 8) ferroélectrique est constitué de couches SBT ou de couches PZT dopées ou non dopées.

7. Procédé suivant l'une des revendications 1 à 6,
**caractérisé en ce que**
le matériau (2, 8) ferroélectrique recouvre plusieurs électrodes (30a, 30b), chaque électrode (30a, 30b) définissant un bloc (40a, 40b) de diverses parties (4a, 4b, 4c, 4d) du matériau (2, 8) ferroélectrique et la mémorisation de l'information s'effectuant bloc par bloc.

8. Procédé suivant l'une des revendications 1 à 7,
**caractérisé en ce que**
pour effacer l'information mémorisée, on fait cesser la tension de polarisation (Uₐ, U_{b}) d'au moins une électrode (30a, 30b).

9. Procédé suivant la revendication 8,
**caractérisé en ce que**
avant la mémorisation de l'information, on efface l'information mémorisée.

10. Procédé suivant la revendication 9,
**caractérisé en ce que**
on efface l'information mémorisée bloc par bloc.

11. Procédé de lecture d'une information mémorisée dans un système, suivant l'une des revendications 17 à 20, comprenant les stades dans lesquels :
- on prépare le matériau (2, 8) ferroélectrique ayant une surface dont la surface a un profil (28) de niveau qui représente l'information mémorisée, le matériau (2, 8) ferroélectrique recouvrant plusieurs électrodes (30a, 30b), chaque électrode (30a, 30b) définissant un bloc (40a, 40b) de diverses parties (4a, 4b, 4c, 4d) du matériau (2, 8) ferroélectrique et les diverses électrodes (30a, 30b) étant soumises respectivement indépendamment l'une de l'autre d'une manière durable pendant toute la durée de mémorisation à une tension (Uₐ, U_{b}) de polarisation ; et
- au moyen d'une sonde (6, 14, 16) d'échantillonnage qui passe à la surface du matériau (2, 8) ferroélectrique on détermine le profil en hauteur de la surface du matériau (2, 8) ferroélectrique à partir duquel on déduit l'information mémorisée dans le profil (28) en hauteur.

12. Procédé suivant la revendication 11,
**caractérisé en ce que**
on détermine le profil (28) en hauteur de la surface du matériau (2, 8) ferroélectrique par la polarisation de diverses parties (4a, 4b, 4c, 4d) du matériau (2, 8) ferroélectrique.

13. Procédé suivant la revendication 11 ou 12,
**caractérisé en ce que**
l'on détermine le profil (28) en hauteur de la surface du matériau (2, 8) ferroélectrique au moyen d'une pointe (16) de la sonde (14) d'échantillonnage.

14. Procédé suivant la revendication 13,
**caractérisé en ce que**
l'on fait passer la pointe (16) en mode tapping, en mode contact ou en mode sans contact sur la surface du matériau (2, 8) ferroélectrique pour déterminer le profil (28) en hauteur du matériau (2, 8) ferroélectrique.

15. Procédé suivant l'une des revendications précédentes,
**caractérisé en ce que**
la pointe (16) de la sonde (14) d'échantillonnage est une pointe AFM.

16. Procédé suivant la revendication 15,
**caractérisé en ce que**
la pointe AFM est une pointe en silicium taillée au plasma, une pointe en carbone déposée dans le faisceau d'électrode ou une pointe en nanotube de carbone.

17. Système de mémorisation et de lecture d'information dans un matériau ferroélectrique comprenant
- un matériau (2, 8) ferroélectrique ayant une surface, le matériau (2, 8) ferroélectrique recouvrant plusieurs électrodes (30a, 30b), chaque électrode (30a, 30b) définissant un bloc (40a, 40b) de diverses parties (4a, 4b, 4c, 4d) du matériau (2, 8) ferroélectrique et les diverses électrodes (30a, 30b) pouvant être soumises respectivement indépendamment les unes des autres d'une manière durable pendant toute la durée de la mémorisation à une tension (Uₐ, U_{b}) de polarisation.
- Au moins une sonde (6, 14, 16) d'échantillonnage pour écrire de l'information dans le matériau (2, 8) ferroélectrique qui passe sur la surface du matériau (2, 8) ferroélectrique dans lequel au moyen de la sonde (6, 14) d'échantillonnage on peut provoquer pour écrire l'information mécaniquement une variation de polarisation des diverses parties (4a, 4b, 4c, 4d) du matériau (2, 8) ferroélectrique,
- Au moins une sonde (6, 14, 16) d'échantillonnage pour lire de l'information dans le matériau (2, 8) ferroélectrique qui peut passer sur la surface du matériau (2, 8) ferroélectrique dans lequel pour lire l'information, on peut établir un profil (28) en hauteur de la surface du matériau (2, 8) ferroélectrique, et
- une unité (26) d'exploitation qui déduit l'information mémorisée du profil (28) en hauteur de la surface du matériau (2, 8) ferroélectrique.

18. Système suivant la revendication 17,
**caractérisé en ce que**
la sonde (6, 14, 16) d'échantillonnage a une pointe en silicium taillée au plasma, une pointe au carbone déposée dans le faisceau d'électrode ou une pointe en nanotube de carbone qui sert à écrire et/ou à lire l'information.

19. Système suivant la revendication 17 ou 18,
**caractérisé en ce que**
le matériau (2, 8) ferroélectrique a une structure cristalline de perowskite, de spinelle ou apparentée.

20. Système suivant la revendication 19,
**caractérisé en ce que**
le matériau (2, 8) ferroélectrique est constitué de couches SBT ou de couches PZT dopées ou non dopées.
